(19) Europäisches Patentamt / European Patent Office / Office européen des brevets

(11) **EP 3 891 238 B1**

(12) **EUROPEAN PATENT SPECIFICATION**

(45) Date of publication and mention
of the grant of the patent:
**07.02.2024   Bulletin 2024/06**

(21) Application number: **19809530.9**

(22) Date of filing: **03.12.2019**

(51) International Patent Classification (IPC):
*C09J 151/06* (2006.01)      *C08F 10/00* (2006.01)
*C08F 210/16* (2006.01)

(52) Cooperative Patent Classification (CPC):
(C-Sets available)
**C09J 151/06;** C08F 210/16; C08L 2314/02   (Cont.)

(86) International application number:
**PCT/EP2019/083546**

(87) International publication number:
**WO 2020/115071 (11.06.2020 Gazette 2020/24)**

(54) **ADHESIVE POLYMER COMPOSITION**

HAFTENDE POLYMERZUSAMMENSETZUNG

COMPOSITION DE POLYMÈRE ADHÉSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **03.12.2018   EP 18209879**

(43) Date of publication of application:
**13.10.2021   Bulletin 2021/41**

(73) Proprietor: **Borealis AG**
**1020 Vienna (AT)**

(72) Inventors:
• **PRADES, Floran Régis**
**4021 Linz (AT)**
• **OLLIKAINEN, Andrei**
**06101 Porvoo (FI)**

(74) Representative: **Kador & Partner Part mbB**
**Corneliusstraße 15**
**80469 München (DE)**

(56) References cited:
**EP-A1- 0 688 794      EP-A1- 1 316 598
EP-A1- 2 570 195      WO-A1-95/09191**

EP 3 891 238 B1

(52) Cooperative Patent Classification (CPC): (Cont.)

C-Sets
**C08F 210/16, C08F 4/6555;**
**C09J 151/06, C08L 23/22;**
**C09J 151/06, C08L 51/04;**
C08F 210/16, C08F 210/14, C08F 2500/02,
C08F 2500/06, C08F 2500/12, C08F 2500/27,
C08F 2500/29

**Description**

**Field of the invention**

The present invention relates to an adhesive polymer composition comprising an acid grafted polyethylene and an elastomer, to an article comprising a layer of the adhesive polymer composition, in particular a multilayer pipe such as a coated metal pipe, and to the use of the adhesive polymer composition for the production of an adhesive layer, in particular an adhesive layer of a multilayer structure of a pipe such as a coated metal pipe.

**Problem to be solved**

Multilayer structures comprising two, three, four, five or more layers are known for many applications such as the protective coating of pipes. In these multilayer structures different layers most often consist of different materials which accordingly have different physical and chemical properties. This results in the problem that adjacent layers do not or only to an insufficient extent adhere to each other. Therefore, it is commonly known to build up multilayer structure with intermediate adhesive layers for improving the adhesion of adjacent layers consisting of different materials and thus avoid delamination.

For example, in the coating of metal pipes commonly a three-layer polymer structure is used. It consists of an epoxy layer which is designed to firmly adhere to the outer surface of the metal wall of the pipe, an intermediate adhesive layer and an outer polyolefin protective layer which commonly is a polyethylene or polypropylene. The three-layer structure shows improved properties compared to formerly known single-layer coatings. On the one hand, the epoxy layer shows an improved bonding to the metal wall, avoids cathodic disbondment and provides less oxygen penetration whereas on the other hand the outer polyolefin-based layer provides good mechanical protection, and less water penetration. However, to avoid delamination of the polyolefin layer and the epoxy layer which would result in damage of the multilayer coating an adhesive layer between both layers is necessary.

Adhesive layers and materials for the production of such layers are for example known from WO99/37730 A1 which discloses an adhesive composition comprising an ethylene copolymer component and from 2 to 35 wt% of a grafted metallocene polyethylene.

JP 8208915 A describes an adhesive polyethylene composition comprising a grafted ethylene/alpha-olefin copolymer as cover for e.g. cables and steel pipes.

EP 0896044 A1 relates to an adhesive resin composition, in particular used for laminates. The resin contains an alpha-olefin/aromatic vinyl compound random copolymer which is partially or wholly graft-modified.

EP 0791628 B1 provides an adhesive composition comprising a grafted long-chain branched ethylene-$\alpha$-olefin copolymer with a tackifier or an ethylene-vinyl acetate copolymer for use as film layers in adhesion to e.g. metals.

EP 1316598 B1 discloses an adhesive polymer composition comprising an acid grafted polyethylene which has been produced using a single-site catalyst in an amount of at least 40 wt% of the composition.

WO 2009/103516 A2 discloses an adhesive polymer composition comprising an acid grafted polyethylene, which has a $M_w/M_n$ from 6 to 30, a density from 0.93 to 0.955 g/cm$^3$, $M_w$ from 20 000 to 500 000 g/mol, from 0.01 to 20 CH$_3$/1000 carbon atoms and at least 0.6 vinyl groups/1000 carbon atoms, in an amount of at least 50 wt% of the composition.

In spite of the prior art there still remains a need for adhesive polymer composition for use in the production of adhesive layers for multilayer structures with improved adhesion properties, particularly at higher service temperatures, good processability and wide temperature processing window.

**Summary of the invention**

The present invention provides an adhesive polymer composition comprising:

a) a non-elastomeric copolymer of ethylene and one or more comonomers having 3 to 10 carbon atoms, which non-elastomeric copolymer is present in an amount of 60 to 95 % by weight, based on the adhesive polymer composition, wherein the non-elastomeric copolymer has

(i) a molecular weight distribution Mw/Mn of more than 2.5 to less than 4.0,

(ii) a density of from 0.925 to 0.945 g/cm$^3$, determined according to ISO 1183 -1 method A using compression moulded samples, and

(iii) a content of vinyl groups/ 1000 carbon atoms in the range of more than 0.1 up to 0.6, determined by quantitative nuclear-magnetic resonance (NMR) spectroscopy in solution, and

b) an elastomer, which is an elastomeric ethylene copolymer,

wherein the non-elastomeric copolymer or the non-elastomeric copolymer and the elastomer have been grafted with an acid grafting agent.

The present invention also provides an article, in particular a multilayer pipe, comprising an adhesive layer which comprises the adhesive polymer composition.

The present invention also provides a use of the adhesive polymer composition for the production of an adhesive layer, preferably an adhesive layer of a pipe.

**Detailed description**

The inventive adhesive polymer composition shows improved adhesion properties, in particular when used as an adhesive layer. For example, the adhesive polymer composition when coextruded as an adhesive layer in the three-layer structure for coating of metal pipes shows improved peel strength values at 23 °C, 80 °C and even 90 °C and a wide temperature processing window. Moreover, the inventive adhesive polymer composition shows good processability and improved comonomer distribution within the non-elastomeric component which achieves improved adhesive properties at higher service temperatures. The inventors have surprisingly found out that a less homogeneous comonomer distribution of the non-elastomeric component provides higher values of peel strength at elevated temperatures such as 80 °C or even 90 °C.

Thus, the inventive adhesive polymer composition may preferably achieve a peel strength at 80 °C according to ISO 21809-1:2011 and as described herein of not less than 110 N/cm, more preferably not less than 120 N/cm and still more preferably not less than 125 N/cm.

Moreover, the inventive adhesive polymer composition may preferably achieve a peel strength at 90 °C according to ISO 21809-1:2011 and as described herein of not less 50 N/cm, more preferably not less than 70 N/cm and still more preferably not less than 80 N/cm.

The inventive adhesive polymer composition may preferably achieve a peel strength at 23 °C according to ISO 21809-1:2011 and as described herein of not less than 350 N/cm, more preferably not less than 360 N/cm, still more preferably not less than 370 N/cm, and even more preferably not less than 380 N/cm.

Due to the relatively low homogeneity of the comonomer distribution of the non-elastomeric component, the inventive adhesive polymer composition achieves a rather low comonomer distribution breadth index (CDBI) of less than 50%, preferably less than 45%, more preferably less than 40%, determined by temperature rising elution fractionation (TREF) as described herein and in WO 93/03093 A1.

The non-elastomeric copolymer of the inventive adhesive polymer composition is a non-elastomeric copolymer of ethylene and one or more $\alpha$-unsaturated olefinic comonomer(s). Preferably the $\alpha$-olefin comonomer(s) comprise(s) from 3 to 10 carbon atoms, more preferably from 3 to 8 carbon atoms.

Examples of the $\alpha$-olefin comonomers include propylene, 1-butene, 1-pentene, 1-hexene, 4-methyl-1-pentene, 1-octene, 1-decene, and mixtures thereof. Particularly preferred comonomers are 1-butene, 1-hexene and 1-octene and 1-octene is particularly preferred.

Typically, the amount of comonomer within the non-elastomeric copolymer is from 1 to 30 % by weight and more preferably is from 1 to 7 % by weight.

The non-elastomeric copolymer is present in an amount of 60 to 95 % by weight based on the adhesive polymer composition. In a further preferred embodiment the non-elastomeric copolymer is present in an amount of 70 to 90 % by weight based on the adhesive polymer composition.

The non-elastomeric copolymer has a molecular weight distribution Mw/Mn of more than 2.5 to less than 4.0, preferably from 2.8 to 3.9.

The non-elastomeric copolymer has a density of from 0.925 to 0.945 g/cm$^3$, preferably from 0.930 to 0.942 g/cm$^3$.

The non-elastomeric copolymer has a content of more than 0.1 to 0.6 vinyl groups/1000 carbon atoms, preferably from 0.2 to 0.6 vinyl groups/1000 carbon atoms, even more preferably from 0.2 to 0.5 vinyl groups/1000 carbon atoms, still more preferably from 0.2 to 0.4 vinyl groups/1000 carbon atoms.

The non-elastomeric copolymer can be free of long chain branches or have long chain branches. Typically, the amount of long chain branches depends on the catalyst and on the process conditions employed. The term 'long chain branches' refers to branches produced by polymerisation conditions but not to branches introduced by polymerisable comonomer species.

The non-elastomeric copolymer is preferably produced in a polymerization process comprising any Ziegler-Natta catalyst known in the art.

More preferably, the non-elastomeric copolymer is produced in a polymerization process comprising a Ziegler-Natta catalyst comprises a titanium compound, a magnesium compound and an internal donor which is a non-phthalic acid ester, optionally a co-catalyst and optionally an external donor.

Any known process may be used, e.g. slurry, gas phase or solution process or a combination of the above mentioned processes for preparation of the non-elastomeric copolymer.

Further typically, the non-elastomeric copolymer may be produced in a solution process, for example as disclosed in WO 2017/108969 A1.

The polymerisation catalyst may be a Ziegler-Natta catalyst as disclosed e.g. in EP 0 721 474 A1 and EP 0 769 027 A1.

In the inventive adhesive polymer composition the elastomer is an elastomeric ethylene copolymer. The elastomer may be ethylene propylene rubber (EPR), ethylene $\alpha$-olefin elastomer or plastomer or ethylene propylene diene monomer rubber (EPDM). Preferably the elastomer comprises an elastomeric copolymer of ethylene with one or more polar monomer(s). Preferred examples of such elastomers are ethylene-alkyacrylates and ethylene-alkylacetates. Further preferred, the comonomer has a polar moiety of the formula $-O(CO)C_1-C_6$-alkyl or $-C(O)-OC_1-C_6$-alkyl. Particularly preferred elastomers are ethylene vinylacetate (EVA), ethylene methylacrylate (EMA), ethylene methylmethacrylate (EMMA), ethylene propylacrylate and ethylene butylacrylate (EBA), in particular EBA.

The elastomeric copolymer may preferably be present in an amount of 5 to 40 % by weight, more preferably 10 to 30 % by weight, based on the adhesive polymer composition

The elastomer may be made by any process known in the art. Acrylate copolymers are produced in a free-radical process.

As acid grafting agent, any such agent can be used which is known to be suitable for this purpose by the person skilled in the art.

Preferably, the acid grafting agent is an unsaturated carboxylic acid or a derivative thereof such as anhydrides, esters and salts (both metallic and non-metallic). Preferably, the unsaturated group is in conjugation with the carboxylic group. Examples of such grafting agents include acrylic acid, methacrylic acid, fumaric acid, maleic acid, nadic acid, citraconic acid, itaconic acid, crotonic acid, and their anhydrides, metal salts, esters amides or imides.

The preferred grafting agents are maleic acid, its derivatives such as maleic anhydride, and in particular maleic anhydride.

Grafting can be carried out by any process known in the art such as grafting in a melt without a solvent or in solution or dispersion or in a fluidised bed. Typically, grafting is performed in a heated extruder or mixer as e.g. described in US 3236917 A, US 4639495 A, US 4950541 A or US 5194509 A. Typically, grafting is carried out in a twin screw extruder such as described in US 4950541 A.

Grafting may be carried out in the presence or absence of a radical initiator but is preferably carried out in the presence of a radical initiator such as an organic peroxide, organic perester or organic hydroperoxide.

The amount of said acid grafting agent added to the adhesive polymer composition before grafting is preferably from 0.01 to 3.0 parts by weight, more preferably from 0.03 to 1.5 parts by weight based on the adhesive polymer composition.

Grafting may be applied either to the non-elastomeric copolymer or to the blend of non-elastomeric copolymer and elastomer. Preferably, grafting is applied to the blend of non-elastomeric copolymer and elastomer.

Preferably the non-elastomeric copolymer before grafting has a melt flow rate $MFR_2$ of from 1 to 20 g/min, more preferably of from 1 to 10 g/min.

The non-elastomeric copolymer can be a unimodal or a multimodal polyethylene. Preferably the non-elastomeric copolymer is a unimodal polyethylene.

The expression 'modality of a polymer' refers to the form of its molecular weight distribution (MWD) curve, i.e. the appearance of the graph of the polymer weight fraction as a function of its molecular weight. If the polymer is produced in one reactor or several reactors having similar conditions all over the reactor(s), only one type of polymer is produced with a Ziegler-Natta catalyst. In that case, the produced polymer is unimodal.

In a preferred embodiment the adhesive polymer composition has an $MFR_2$ value (after grafting) of from 0.1 to 10 g/min, more preferably from 1.0 to 6.0 g/min.

The adhesive polymer composition has a density of from 0.925 to 0.945 $g/cm^3$, more preferably from 0.930 to 0.942 $g/cm^3$.

The adhesive polymer composition comprises the non-elastomeric copolymer and the elastomer as described above. In addition to these components, conventional additives may also be present in the adhesive polymer composition in small amounts, preferably up to at most 4 % by weight. For example, an antioxidant may be present in the adhesive polymer composition in an amount of at most 10 000 ppm, more preferably at most 5 000 ppm and most preferably at most 3 000 ppm.

It is preferred that the adhesive polymer composition apart from the conventional additives consists of the non-elastomeric copolymer and the elastomer, i.e. that no further polymer components before or after grafting are added. Conventional additives may be added before or after grafting.

The adhesive polymer composition of this invention is most useful as co-extrudable adhesive, but other applications are not excluded.

The present invention also relates to an article which comprises an adhesive layer comprising the adhesive polymer composition as described above. Such articles e.g. comprise pipes, cables, films, articles made by extrusion coating and articles used in engineering applications. In the latter, the adhesive polymer composition may also be used to provide compatibility between various layers or parts.

In a preferred embodiment, the adhesive layer in the article is adjacent to a polyolefin layer.

The present invention in particular relates to a multilayer pipe, i.e. a pipe comprising a multilayer coating with two, three, four, five or more layers, which comprises a polyolefin layer and an adhesive layer adjacent to the polyolefin layer which comprises the inventive adhesive polymer composition as described above.

In a preferred embodiment, the present invention also relates to a coated metal pipe, comprising a polyolefin layer and a layer of a polar polymer, in particular an epoxy layer, wherein between the layers an adhesive layer is present which comprises the adhesive polymer composition according to any of the above described embodiments.

In particular, the present invention also relates to a metal pipe with an three-layer protective coating consisting of an inner epoxy layer, an intermediate adhesive layer comprising the inventive adhesive polymer composition and an outer polyolefin layer such as a polyethylene or polypropylene layer.

Furthermore, the present invention relates to the use of the adhesive polymer composition as described above for the production of an adhesive layer. Preferably, the present invention further relates to the use of the adhesive polymer composition for the production of an adhesive layer in an article as e.g. a pipe, a cable, a film, an article made by extrusion coating and articles used in engineering applications. In these latter articles, the adhesive polymer composition may also be used to provide compatibility between various layers or parts.

In a preferred embodiment, the present invention also relates to the use of the adhesive polymer composition for the production of an adhesive layer of a pipe. In particular, the present invention also relates to the use of the adhesive polymer composition for the production of an adhesive layer of the coating of a metal pipe with a three-layer protective coating as described above.

In the production of coated metal pipes having a three-layer coating preferably the epoxy layer is produced first by spraying epoxy in powder or liquid form, in one or two component form, onto the heated outer surface of the metal wall. Thereby, the epoxy forms a thin layer which firmly adheres to the metal surface. Subsequently, the adhesive and the outer polyolefin layer which preferably is a polyethylene or polypropylene layer are co-extruded onto the epoxy layer. The adhesive can also be applied by spraying the adhesive in a powder form onto the epoxy layer.

## Methods

### Melt index

The melt flow rate (MFR) is determined under a load of 2.16 kg at 190 °C according to ISO 1133-1 method B and is indicated in g/10 min.

### Density

Density of the polymer is measured according to ISO 1183 -1 Method A using compression moulded samples.

### Quantification of microstructure by NMR spectroscopy

Quantitative nuclear-magnetic resonance (NMR) spectroscopy was used to quantify the comonomer content of the polymers.

Quantitative $^{13}C\{^{1}H\}$ NMR spectra were recorded in the molten-state using a Bruker Avance III 500 MHz NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128, "NMR Spectroscopy of Polymers: Innovative Strategies for Complex Macromolecules", Chapter 24, 401 (2011); Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813; Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn.

2005, 176, 239; Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\square+$) at 30.00 ppm (J. Randall, Macromol. Sci., Rev. Macromol. Chem. Phys. 1989, C29, 201).

Characteristic signals resulting from isolated 1-octene incorporation i.e. EEOEE comonomer sequences, were observed (J. Randall, Macromol. Sci., Rev. Macromol. Chem. Phys. 1989, C29, 201; Qiu, X., Redwine, D., Gobbi, G., Nuamthanom, A., Rinaldi, P., Macromolecules 2007, 40, 6879; and Liu, W., Rinaldi, P., McIntosh, L., Quirk, P., Macromolecules 2001, 34, 4757). Isolated 1-octene incorporation was quantified using the integral of the signal at 38.32 ppm assigned to the *B6 sites, accounting for the number of reporting sites per comonomer:

$$O = I_{*B6}$$

With no other signals indicative of other comonomer sequences observed, e.g. consecutive comonomer incorporation, the total 1-octene comonomer content was calculated based solely on the amount of the isolated 1-octene sequence:

$$O_{total} = O$$

Characteristic signals resulting from saturated end-groups were observed. Such saturated end-groups were quantified using the average integral of the two resolved signals at 22.84 and 32.23 ppm. The 22.84 ppm integral is assigned to the unresolved signals corresponding to both 2B6 and 2S sites of 1-octene and the saturated chain end respectively. The 32.23 ppm integral is assigned to the unresolved signals corresponding to both 3B6 and 3S sites of 1-octene and the saturated chain end respectively.

To compensate for the influence of the 2B6 and 3B6 1-octene sites the total 1-octene content is used:

$$S = (1/2)*( I_{2S+2B6} + I_{3S+3B6} - 2*O_{total})$$

The ethylene comonomer content was quantified using the integral of the bulk methylene (bulk) signals at 30.00 ppm. This integral included the $\gamma$ and 4B6 sites from 1-octene as well as the $\delta^+$ sites. The total ethylene comonomer content was calculated based on the bulk integral and compensating for the observed 1-octene sequences and end-groups:

$$E_{total} = (1/2)*[ I_{bulk} + 2*O + 3*S ]$$

The total mole fraction of 1-octene in the polymer was then calculated as:

$$fO = O_{total} / ( E_{total} + O_{total} )$$

The total comonomer incorporation of 1-octene in mole percent was calculated from the mole fraction in the usual manner:

$$O\ [mol\%] = 100 * fO$$

The total comonomer incorporation of 1-octene in weight percent was calculated from the mole fraction in the standard manner:

$$O\ [wt\%] = 100 * ( fO * 112.21) / ( (fO * 112.21) + ((1-fO) * 28.05) )$$

**Quantification of unsaturations by NMR spectroscopy**

Quantitative nuclear-magnetic resonance (NMR) spectroscopy was used to quantify the content of unsaturated groups present in the polymers.

Quantitative $^1$H NMR spectra were recorded in the solution-state using a Bruker Avance III MHz 400 NMR spectrometer operating at 400.15 MHz. All spectra were recorded using a $^{13}$C optimised 10 mm selective excitation probehead at 125°C using nitrogen gas for all pneumatics. Approximately 200 mg of material was dissolved in *1,2*-tetrachloroethane-$d_2$ (TCE-$d_2$) using approximately 3 mg of Hostanox 03 (CAS 32509-66-3) as stabiliser. Standard single-pulse excitation was employed utilising a 30 degree pulse, a relaxation delay of 10 s and 10 Hz sample rotation. A total of 128 transients were acquired per spectra using 4 dummy scans. This setup was chosen primarily for the high resolution needed for unsaturation quantification and stability of the vinylidene groups (He, Y., Qiu, X, and Zhou, Z., Mag. Res. Chem. 2010, 48, 537-542; Busico, V. et. al. Macromolecules, 2005, 38 (16), 6988-6996). All chemical shifts were indirectly referenced to TMS at 0.00 ppm using the signal resulting from the residual protonated solvent at 5.95 ppm.

When characteristic signals corresponding to the presence of terminal aliphatic vinyl groups (R-CH=CH$_2$) were observed the amount was quantified using the integral of the two coupled inequivalent terminal CH$_2$ protons (Va and Vb) at 4.95, 4.98 and 5.00 and 5.05 ppm accounting for the number of reporting sites per functional group:

$$Nvinyl = IVab / 2$$

When characteristic signals corresponding to the presence of internal vinylidene groups (RR'C=CH$_2$) were observed the amount was quantified using the integral of the two CH$_2$ protons (D) at 4.74 ppm accounting for the number of reporting sites per functional group:

$$Nvinylidene = ID / 2$$

When characteristic signals corresponding to the presence of internal cis-vinylene groups (E-RCH=CHR'), or related structure, were observed the amount was quantified using the integral of the two CH protons (C) at 5.39 ppm accounting for the number of reporting sites per functional group:

$$Ncis = IC / 2$$

When characteristic signals corresponding to the presence of internal trans-vinylene groups (Z-RCH=CHR') were observed the amount was quantified using the integral of the two CH protons (T) at 5.45 ppm accounting for the number of reporting sites per functional group:

$$Ntrans = IT / 2$$

When characteristic signals corresponding to the presence of internal trisubstituted-vinylene groups (RCH=CHR'R"), or related structure, were observed the amount was quantified using the integral of the CH proton (Tris) at 5.14 ppm accounting for the number of reporting sites per functional group:

$$Ntris = ITris$$

The Hostanox 03 stabliser was quantified using the integral of the multiplet from the aromatic protons (A) at 6.92, 6.91, 6.69 and 6.89 ppm and accounting for the number of reporting sites per molecule:

$$H = IA / 4$$

As is typical for unsaturation quantification in polyolefins the amount of unsaturation was determined with respect to the total carbon atoms, even though quantified by $^1$H NMR spectroscopy. This allows for direct comparison to other microstructure quantities derived directly from $^{13}$C NMR spectroscopy.

The total amount of carbon atoms were calculated from the integral of the bulk aliphatic signal between 2.85 and 1.00 ppm with compensation for the methyl signals from the stabiliser and carbon atoms relating to the unsaturated functionality not included by this region:

$$NCtotal = (Ibulk - 42*H) / 2 + 2*Nvinyl + 2*Nvinylidene + 2*Ncis + 2*Ntrans + 2*Ntris$$

The content of unsaturated groups (U) were calculated as the number of unsaturated groups in the polymer per thousand total carbons (kCHn):

$$U = 1000*N / NCtotal$$

The total amount of unsaturated groups were calculated as the sum of the individual observed unsaturated groups and thus reported per thousand total carbons:

$$Utotal = Uvinyl + Uvinylidene + Ucis + Utrans + Utris$$

The relative content of a specific unsaturated group (U) is reported as the fraction or percentage of a given unsaturated group with respect to the total amount of unsaturated groups:

$$[U] = Ux / Utotal$$

## Molecular weight averages, molecular weight distribution (Mn, Mw, Mz, MWD)

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i x\, M_i)}{\sum_{i=1}^{N} A_i} \quad (2)$$

$$M_z = \frac{\sum_{i=1}^{N}(A_i\, x\, M_i^2)}{\sum_{i=1}^{N}(A_i x M_i)} \quad (3)$$

For a constant elution volume interval $\Delta V_i$, where $A_i$, and $M_i$ are the chromatographic peak slice area and polyolefin molecular weight (Mw), respectively associated with the elution volume, $V_i$, where N is equal to the number of data points obtained from the chromatogram between the integration limits. Peak Integration was performed according to ISO 16017-1:2003, which means that oil and antioxidant peaks below 1000 g/mol are not included into the calculation of the MWD.

A high temperature GPC instrument, equipped with an infrared (IR) detector (IR5) from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using PolymerChar GPCone software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at 160°C for 15 min. The conversion of the polystyrene peak molecular weight to polyolefin molecular weights is accomplished by using the Mark Houwink equation and the following Mark Houwink constants:

$$K_{PS} = 19 \times 10^{-3} \text{ ml/g}, \quad \alpha_{PS} = 0.655$$

$$K_{PE} = 39 \times 10^{-3} \text{ ml/g}, \quad \alpha_{PE} = 0.725$$

$$K_{PP} = 19 \times 10^{-3} \text{ ml/g}, \quad \alpha_{PP} = 0.725$$

A third order polynomial fit was used to fit the calibration data.

All samples were prepared in the concentration range of 0.5 -1 mg/ml and dissolved at 160 °C for 3 hours under continuous gentle shaking.

**Comonomer distribution breadth index (CDBI)**

The chemical composition distribution was determined by analytical Temperature Rising Elution fractionation as described by Soares, J.B.P., Fractionation, In: Encyclopedia Of Polymer Science and Technology, John Wiley & Sons, New York, pp. 75-131, Vol. 10, 2001. The separation of the polymer in TREF is according to their crystallinity in solution. The TREF profiles were generated using a CRYSTAF-TREF 200+ instrument manufactured by PolymerChar S.A. (Valencia, Spain).

The polymer sample was dissolved in 1,2,4-trichlorobenzene (TCB, stabilized with 250 mg/l 2,6-Di tert butyl-4-methyl-phenol) at a concentration between 1,5 and 2,0 mg/ml at 150 °C for 180 min and 1.8 ml of the sample solution was injected into the column (8 mm inner diameter, 15 cm length, filled with inert support e.g. glass beads). The column oven was then rapidly cooled to 110 °C and held at 110 °C for 30 min for stabilization purpose and it was later slowly cooled to 35°C under a constant cooling rate (0.1 °C/min). The polymer was subsequently eluted from the column with 1,2,4-trichlorobenzene (stabilized with 250 mg/L 2,6-Di tert butyl-4-methyl-phenol) at a flow rate of 0,5 ml/min at 35 °C for a period of 10 min followed by a temperature increase from 35 °C to 135 °C at a constant heating rate of 0.5 °C/min with a flow rate of 0,5ml/min. The concentration of the polymer during elution was recorded by an infrared detector (measuring the C-H absorption at 3.5 micrometer wavelength). The detector response was plotted as a function of the temperature. The normalized concentration plot was presented as fractogram together with the cumulative concentration signal normalized to 100.

***Definition of High crystalline fraction (HCF) and Low crystalline fraction (LCF)***

The high crystalline fraction (HCF) is the amount in wt.-% of the polymer fraction with will elute between 90°C and 110°C elution temperature, which mainly contains the homo-polyethylene chains or chains with a very low branching content.

The low crystalline fraction (LCF) is than the amount in wt.-% of the polymer fraction with elutes between 35 and 90°C.

**Peel strength**

Peel strength designates the relative strength of the bonding between epoxy layer and adhesive layer. The peel strength of the coating compositions was measured at 23 °C, 80 °C and 90 °C according to ISO21809-1:2011 using a Zwick Roell tensile testing machine, with the following alterations to the method: The peel strength was recorded for three minutes, after which the mean value of the peel strength recorded over these three minutes was calculated. The mean value corresponds to the reported peel strength of the composition.

**Examples**

Polyethylene PE1 (inventive)

A copolymer of ethylene with 1-octene comonomer was produced in a solution polymerisation process using a Ziegler-Natta catalyst as described in Example III of WO 95/09191 A1 as catalyst A.

The catalyst/donor feed inside the reactor (average) was BOMAG, SEAC, TBT, 2-chlorobutane and TEA as activator. The obtained copolymer has a density of 936 kg/m$^3$, a MFR$_2$ of 4.5 g/10min, and a melting temperature, Tm, of 125°C.

Polymerisation conditions can be found in Table 1 below and polymer properties are shown in Table 2 below.

Polyethylene PE2 (inventive)

A copolymer of ethylene with 1-octene comonomer was produced in a solution polymerisation process using a Ziegler-Natta catalyst as described in Example III of WO 95/09191 A1 as catalyst A. The catalyst/donor feed inside the reactor (average) was BOMAG, SEAC, TBT, 2-chlorobutane and TEA as activator. The obtained copolymer has a density of 935 kg/m$^3$, a MFR$_2$ of 7.3 g/10min, and a melting temperature, Tm, of 124°C.

The polymerisation was carried out according to the conditions as shown in Table 1 below and polymer properties are shown in Table 2 below.

**Table 1**

|  | PE1 | PE2 |
|---|---|---|
| C(8-1)/C2 ratio (kg/kg) | 0.25 | 0.25 |
| Reactor temperature (°C) | 201.0 | 200.0 |
| H2/C2 ratio (Nm$^3$/ton) | 1.00 | 0.75 |
| C2 conversion (%) | 95.50 | 95.00 |
| Exit temperature deep cooling (°C) | -32.50 | -30.0 |
| Absorption ratio C6/C2 (kg/kg) | 4.20 | 4.6 |
| iPCl conc. in monomer stream (mg/l) | 2.5 | 2.5 |

Polyethylene PE3 (comparative)

A medium density polyethylene was produced using a Ziegler-Natta catalyst prepared according to EP 2 746 298 A1, CE2 with the exception that silica ES70X (manufactured by Grace Davison) was used as the carrier material. Polymerisation was carried out in a gas phase reactor at a pressure of 20 bar (Unipol process). The partial pressure of ethylene was 5 bar and the rest of the pressure was made up of nitrogen, hydrogen and butene. Butene was used as a comonomer and the feed ratio was 43 kg butene/ton ethylene. Hydrogen was added to control the melt flow rate with a hydrogen/ethylene ratio of 0.25. The temperature in the reactor was around 90 °C. The obtained ethylene copolymer has a density of 0.934 g/cm$^3$ and an MFR$_2$ value of 3.6 g/10 min.

**Table 2**

|  | PE1 | PE2 | PE3 |
|---|---|---|---|
| Density (g/cm$^3$) | 0.936 | 0.935 | 0.934 |
| MFR(190/2.16) | 4.47 | 7.25 | 3.6 |
| MFR(190/10) | 32.09 | 32.24 |  |
| MFR(190/21.6) | 109.32 | 175.15 |  |
| FRR(21,6/2.16) | 24.5 | 24.2 |  |
| Mn | 18000 | 17000 |  |
| Mw | 64000 | 62000 |  |
| Mz | 179000 | 193000 |  |
| Mw/Mn | 3.6 | 3.7 | 4.74 |
| %C8 (mol) | 1.00 | 1.0 |  |
| %C8 (wt) | 4.00 | 4.1 |  |
| Vinyl/kCH$_n$ | 0.35 | 0.29 |  |
| CDBI | 38 | 38 | ~ 20 |

Example 1 - 4 (IE1 - IE4)

The adhesive blend compositions were grafted in Werner & Pfleiderer ZSK 30 mm corotating twin-screw extruder (WP30). Polyethylene PE1 was used for Example 1 and 2. Polyethylene PE2 was used for Example 3 and 4. The adhesive blend compositions are shown in Table 3.

The ethylene butyl acrylate elastomers (BAE), which has a density of 0.926 g/cm$^3$, MFR$_2$ of 4.5 g/10 min and butyl acrylate content of 27 wt%, was added to improve flexibility. The graft was achieved by adding various amounts of maleic anhydride (MAH). The peroxide initiator (POX - Perkadox 14S-fl, Akzo Nobel) was fed as a 10% isododecane solution. The temperature in the extruder was varied between 170 and 210 °C and the screw speed was set at 200 rpm.

Comparative Example 1 (CE1)

The composition was prepared as described in Example 2 (Composition 1) in EP 1 316 598 A1 using PE3 (described above) as the non-elastomeric component. The grafting agent was 0.5 wt.% maleic anhydride (MAH). The peroxide initiator was 0.05 wt.% Perkadox 14S-fl (Akzo Nobel) dissolved in isododecane. The temperature in the extruder was varied between 170 and 210 °C and the screw speed was set at 200 rpm. The resulting grafted adhesive blend composition had a density of 0.934 g/m$^3$ and a MFR$_2$ value of 1.0 g/10 min. The properties of the composition are also shown in Table 3.

**Table 3**

|  |  | IE1 | IE2 | IE3 | IE4 | CE1 |
|---|---|---|---|---|---|---|
| Components | PE1 | 77.80 | 74.80 |  |  |  |
|  | PE2 |  |  | 77.80 | 74.80 |  |
|  | PE3 |  |  |  |  | 69.2 |
|  | Amount BAE (in %) | 22 | 25 | 22 | 25 | 29.7 |
|  | Amount MAH (wt.%) | 0.20 | 0.20 | 0.20 | 0.20 | 0.5 |
| Setting WP30 | Screw speed (in rpm) | 200 | 200 | 200 | 200 | 200 |
|  | Temperature melt (in°C) | 204 | 203 | 207 | 206 |  |
|  | Pressure melt (bar) | 21-22 | 19-20 | 18 | 17-18 |  |
|  | Torque (in %) | 81-82 | 80-81 | 73-74 | 73-74 |  |
|  | Output (kg/h) | 10 | 10 | 10 | 10 |  |
|  | POX feeding (ml/min) | 0.61 | 0.51 | 1.00 | 1.00 | 0.05 (wt.%) |
| Characterisation | MFR(190/ 2.16) (in g/10 min) | 1.3 | 1.62 | 1.51 | 1.52 | 1.0 |

Processing of compositions 1-4 and comparative composition 1

Table 4 shows properties of the grafted adhesive blend compositions and adhesion properties of co-extrudable adhesives coated on steel pipes.

Epoxy powder was sprayed on as corrosion protection, where the temperature of the rotating steel pipeline (8m/min) was 200-220 °C. The adhesive blend composition and the conventional high-density polyethylene outer layer were co-extruded onto the epoxy layer. The co-extrusion was performed with KrausMaffei 45 mm and Barmag 45 mm single screw extruders. The temperature of the adhesive blend composition and the high-density polyethylene at the respective dies was ca 220 °C. Both the adhesive blend composition and high-density polyethylene layer are rolled tightly onto the coating surface with a silicone pressure roller. Thickness value for the epoxy layer was 145 μm, the adhesive blend composition 430 μm, and the polyethylene outer layer 4.0 mm. The cooled three layer composition was evaluated by measuring its peel strength with a Zwick Roell tensile testing machine.

When using the composition of CE1, the coating of steel pipes was done as follows. First, epoxy powder was sprayed on as corrosion protection, where the temperature of the rotating steel pipeline (8 m/min) was 190-200°C. Subsequently, the adhesive blend composition and the conventional high-density polyethylene outer layer was coextruded onto the epoxy layer. The co-extrusion was performed with two Barmag 60-mm single screw extruders. The temperature at the die of the adhesive blend composition and the high-density polyethylene was 225 and 250°C, respectively. Normal thickness values for the epoxy layer is 135 um, the adhesive blend composition 290 $\mu$m, and the polyethylene outer layer 3.2 mm. Both the adhesive blend composition and high-density polyethylene layer are rolled tightly onto the coating surface with a silicone pressure roller. The cooled three layer composition was evaluated by measuring its peel strength with an Instron machine.

**Table 4.**

| Temperature SPC | Peel Strength (in N/cm) | IE1 | IE2 | IE3 | IE4 | CE1 |
|---|---|---|---|---|---|---|
| 200 - 215 | Peel Strength at 23°C | 491 | 456 | 426 | 385 | 400 |
| | Peel Strength at 70°C | | | | | 95 |
| | Peel Strength at 80°C | 237 | 227 | 139 | 130 | 63 |
| | Peel Strength at 85°C | | | | | 48 |
| | Peel Strength at 90°C | 215 | 191 | 104 | 85.2 | 38 |

The peel strength at 23 °C of the grafted blend compositions 1 to 4 (IE1-IE4) are comparable to that of the composition of CE1. However, CE1 has an approximated CDBI of only ca. 20 due to the use of a Ziegler-Natta catalyst in a gas phase polymerization process. Such a material shows a pronounced low molecular weight tail, is less uniform and is more difficult to crystallise.

On the other hand, the inventive adhesive polymer composition, if used as an adhesive layer, e.g. in multilayer pipes, can surprisingly achieve an improved peel strength at elevated temperatures of 80 and 90 °C. It was surprisingly found out that a specific selection of molecular weight distribution, unsaturation and lower comonomer distribution breadth index (CDBI) leads to improved adhesive properties of the adhesive polymer composition according to the present invention at elevated temperature (80°C and 90°C), while still advantageous mechanical properties and processability can be achieved.

## Claims

1. An adhesive polymer composition comprising

   a) a non-elastomeric copolymer of ethylene and one or more comonomers having 3 to 10 carbon atoms, which non-elastomeric copolymer is present in an amount of 60 to 95 % by weight, based on the adhesive polymer composition,
   wherein the non-elastomeric copolymer has

   (i) a molecular weight distribution Mw/Mn in the range of more than 2.5 to less than 4.0,
   (ii) a density of from 0.925 to 0.945 g/cm$^3$, determined according to ISO 1183 -1 method A using compression moulded samples, and
   (iii) a content of vinyl groups/ 1000 carbon atoms in the range of more than 0.1 up to 0.6, determined by quantitative nuclear-magnetic resonance (NMR) spectroscopy in solution, and

   b) an elastomer, which is an elastomeric ethylene copolymer,

   wherein the non-elastomeric copolymer or the non-elastomeric copolymer and the elastomer have been grafted with an acid grafting agent.

2. The adhesive polymer composition according to claim 1, wherein the non-elastomeric copolymer has a comonomer distribution breadth index (CDBI) of less than 50%, determined by temperature rising elution fractionation (TREF) as described herein.

3. The adhesive polymer composition according to claim 1 or 2, wherein the elastomeric copolymer is present in an amount of 5 to 40 % by weight based on the adhesive polymer composition.

4. The adhesive polymer composition according to any one of the preceding claims, wherein the non-elastomeric copolymer has an MFR$_2$, determined under a load of 2.16 kg at 190 °C according to ISO 1133-1 method B, of from 1 to 20 g/10 min, more preferably from 1 to 10 g/10 min.

5. The adhesive polymer composition according to any one of the preceding claims, wherein the non-elastomeric copolymer is obtained in a polymerization process using a Ziegler-Natta catalyst.

6. The adhesive polymer composition according to any one of the preceding claims, wherein the Ziegler-Natta catalyst comprises a titanium compound, a magnesium compound and an internal donor which is a non-phthalic acid ester, optionally a co-catalyst and optionally an external donor.

7. The adhesive polymer composition according to any one of the preceding claims, wherein the adhesive polymer composition has an $MFR_2$ value, determined under a load of 2.16 kg at 190 °C according to ISO 1133-1 method B, of from 0.1 to 10 g/10 min, preferably from 1.0 to 6.0 g/min.

8. The adhesive polymer composition according to any one of the preceding claims, wherein the acid grafting agent is an unsaturated carboxylic acid or a derivative thereof, more preferably maleic acid or a derivative thereof, in particular maleic anhydride.

9. The adhesive polymer composition according to any one of the preceding claims, wherein the elastomer comprises an elastomeric ethylene copolymer, optionally with polar comonomer groups.

10. The adhesive polymer composition according to any one of the preceding claims, having a peel strength at 80 °C according to ISO 21809-1:2011 and as described herein of not less than 110 N/cm.

11. The adhesive polymer composition according to any one of the preceding claims, having a peel strength at 90 °C according to ISO 21809-1:2011 and as described herein of not less than 50 N/cm.

12. An article, in particular a multilayer pipe, comprising an adhesive layer which comprises the adhesive polymer composition according to any one of the preceding claims.

13. Use of the adhesive polymer composition according to any one of claims 1 to 12 for the production of an adhesive layer.

14. The use according to claim 13, for the production of an adhesive layer of a pipe.


**Patentansprüche**

1. Haftende Polymerzusammensetzung, umfassend:

   a) ein nicht-elastomerisches Copolymer aus Ethylen und einem oder mehreren Comonomeren mit 3 bis 10 Kohlenstoffatomen, wobei das nicht-elastomerische Copolymer mit einem Anteil von 60 bis 95 Gewichtsprozent basierend auf der haftenden Polymerzusammensetzung vorhanden ist, wobei das nicht-elastomerische Copolymer aufweist:

   (i) eine Molmassenverteilung Mw/Mn im Bereich von mehr als 2,5 bis weniger als 4,0,
   (ii) eine Dichte von 0,925 bis 0,945 g/cm$^3$, bestimmt gemäß der ISO 1183-1 Methode A unter Verwendung von kompressionsgeformten Proben, und
   (iii) einen Anteil von Vinylgruppen/1000 Kohlenstoffatomen im Bereich von mehr als 0,1 bis zu 0,6, bestimmt gemäß einer quantitativen Kernspinresonanz (NMR)-Spektroskopie in Lösung, und

   b) ein Elastomer, das ein elastomerisches Ethylencopolymer ist,

   wobei das nicht-elastomerische Copolymer oder das nicht-elastomerische Copolymer und das Elastomer mit einem sauren Propfmittel gepfropft wurden.

2. Haftende Polymerzusammensetzung nach Anspruch 1, wobei das nicht-elastomerische Copolymer einen Comonomer-Verteilungsbreitenindex (Comonomer Distribution Breadth Index bzw. CDBI) von weniger als 50%, bestimmt durch eine Temperaturanstiegselutionsfraktionierung (Temperatur Rise Elution Fractionation bzw. TREF) wie hier beschrieben, aufweist.

3. Haftende Polymerzusammensetzung nach Anspruch 1 oder 2, wobei das elastomerische Copolymer mit einem Anteil von 5 bis 40 Gewichtsprozent basierend auf der haftenden Polymerzusammensetzung vorhanden ist.

4. Haftende Polymerzusammensetzung nach einem der vorstehenden Ansprüche, wobei das nicht-elastomerische Copolymer eine $MFR_2$, bestimmt unter einer Last von 2,16 kg bei 190 °C gemäß ISO 1133-1 Methode B von 1 bis 20 g/10 min und vorzugsweise von 1 bis 10 g/10 min aufweist.

5. Haftende Polymerzusammensetzung nach einem der vorstehenden Ansprüche, wobei das nicht-elastomerische Copolymer in einem Polymerisationsprozess unter Verwendung eines Ziegler-Natta-Katalysators erhalten wird.

6. Haftende Polymerzusammensetzung nach einem der vorstehenden Ansprüche, wobei der Ziegler-Natta-Katalysator eine Titanverbindung, eine Magnesiumverbindung und einen internen Donor, der ein nicht-phthalischer Ester ist, optional einen Cokatalysator und optional einen externen Donor umfasst.

7. Haftende Polymerzusammensetzung nach einem der vorstehenden Ansprüche, wobei die haftende Polymerzusammensetzung einen $MFR_2$-Wert, bestimmt unter einer Last von 2,16 kg bei 190 °C gemäß ISO 1133-1 Methode B von 0,1 bis 10 g/10 min und vorzugsweise von 1,0 bis 6,0 g/10 min aufweist.

8. Haftende Polymerzusammensetzung nach einem der vorstehenden Ansprüche, wobei das saure Pfropfmittel eine ungesättigte Carbonsäure oder ein Derivat davon, vorzugsweise eine Maleinsäure oder ein Derivat davon und insbesondere Maleinsäureanhydrid ist.

9. Haftende Polymerzusammensetzung nach einem der vorstehenden Ansprüche, wobei das Elastomer ein elastomerisches Ethylencopolymer, optional mit polaren Comonomergruppen umfasst.

10. Haftende Polymerzusammensetzung nach einem der vorstehenden Ansprüche, die eine Abziehfestigkeit bei 80 °C gemäß ISO 21809-1:2011 und wie hier beschrieben von nicht weniger als 110 N/cm aufweist.

11. Haftende Polymerzusammensetzung nach einem der vorstehenden Ansprüche, die eine Abziehfestigkeit bei 90 °C gemäß ISO 21809-1:2011 und wie hier beschrieben von nicht weniger als 50 N/cm aufweist.

12. Artikel, insbesondere ein mehrschichtiges Rohr, das eine Haftschicht aufweist, die die haftende Polymerzusammensetzung gemäß einem der vorstehenden Ansprüche umfasst.

13. Verwendung der haftenden Polymerzusammensetzung gemäß einem der Ansprüche 1 bis 12 für die Herstellung einer Haftschicht.

14. Verwendung nach Anspruch 13 für die Herstellung einer Haftschicht eines Rohrs.

**Revendications**

1. Composition polymère adhésive comprenant

   a) un copolymère non élastomère d'éthylène et d'un ou plusieurs comonomères ayant de 3 à 10 atomes de carbone, lequel copolymère non élastomère étant présent en une quantité de 60 à 95 % en poids par rapport à la composition polymère adhésive,
   le copolymère non élastomère ayant

   (i) une distribution de masse moléculaire Mw/Mn dans la plage allant de 2,5 à moins de 4,0,
   (ii) une densité de 0,925 à 0,945 g/cm$^3$, déterminée selon la méthode A de la norme ISO 1183-1 à l'aide d'échantillons moulés par compression, et
   (iii) une teneur en groupes vinyle/1 000 atomes de carbone dans la plage allant de plus de 0,1 à 0,6, déterminée par spectroscopie quantitative de résonance magnétique nucléaire (RMN) en solution, et

   b) un élastomère, qui est un copolymère d'éthylène élastomère,

   dans laquelle le copolymère non élastomère ou le copolymère non élastomère et l'élastomère ont été greffés avec un agent de greffage acide.

2. Composition polymère adhésive selon la revendication 1, dans laquelle le copolymère non élastomère a un indice de largeur de distribution des comonomères (CDBI) inférieur à 50 %, déterminé par fractionnement par élution à température croissante (TREF) tel que décrit dans le présent document.

3. Composition polymère adhésive selon la revendication 1 ou 2, dans laquelle le copolymère élastomère est présent en une quantité de 5 à 40 % en poids par rapport à la composition polymère adhésive.

4. Composition polymère adhésive selon l'une quelconque des revendications précédentes, dans laquelle le copolymère non élastomère présente un MFR2, déterminé sous une charge de 2,16 kg à 190 °C selon le méthode B de la norme ISO 1133-1, de 1 à 20 g/10 min, plus préférentiellement de 1 à 10 g/10 min.

5. Composition polymère adhésive selon l'une quelconque des revendications précédentes, dans laquelle le copolymère non élastomère est obtenu par un procédé de polymérisation utilisant un catalyseur Ziegler-Natta.

6. Composition polymère adhésive selon l'une quelconque des revendications précédentes, dans laquelle le catalyseur Ziegler-Natta comprend un composé de titane, un composé de magnésium et un donneur interne qui est un ester d'acide non phtalique, éventuellement un co-catalyseur et éventuellement un donneur externe.

7. Composition polymère adhésive selon l'une quelconque des revendications précédentes, dans laquelle la composition polymère adhésive présente une valeur MFR2, déterminée sous une charge de 2,16 kg à 190 °C selon la méthode B de la norme ISO 1133-1, de 0,1 à 10 g/10 min, de préférence de 1,0 à 6,0 g/min.

8. Composition polymère adhésive selon l'une quelconque des revendications précédentes, dans laquelle l'agent de greffage acide est un acide carboxylique insaturé ou un dérivé de celui-ci, plus préférentiellement l'acide maléique ou un dérivé de celui-ci, en particulier l'anhydride maléique.

9. Composition polymère adhésive selon l'une quelconque des revendications précédentes, dans laquelle l'élastomère comprend un copolymère d'éthylène élastomère, éventuellement avec des groupes comonomères polaires.

10. Composition polymère adhésive selon l'une quelconque des revendications précédentes, présentant une résistance au pelage à 80 °C selon la norme ISO 21809-1:2011 et telle que décrite dans le présent document non inférieure à 110 N/cm.

11. Composition polymère adhésive selon l'une quelconque des revendications précédentes, présentant une résistance au pelage à 90 °C selon la norme ISO 21809-1:2011 et telle que décrite dans le présent document non inférieure à 50 N/cm.

12. Article, en particulier tuyau multicouche, comprenant une couche adhésive qui comprend la composition polymère adhésive selon l'une quelconque des revendications précédentes.

13. Utilisation de la composition polymère adhésive selon l'une quelconque des revendications 1 à 12 pour la production d'une couche adhésive.

14. Utilisation selon la revendication 13, pour la production d'une couche adhésive d'un tuyau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9937730 A1
- JP 8208915 A
- EP 0896044 A1
- EP 0791628 B1
- EP 1316598 B1
- WO 2009103516 A2
- WO 9303093 A1
- WO 2017108969 A1
- EP 0721474 A1

- EP 0769027 A1
- US 3236917 A
- US 4639495 A
- US 4950541 A
- US 5194509 A
- WO 9509191 A1
- EP 2746298 A1
- EP 1316598 A1

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- NMR Spectroscopy of Polymers: Innovative Strategies for Complex Macromolecules. 2011, vol. 401
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M ; SPERBER, O. ; PIEL, C. ; KAMINSKY, W.** *Macromolecules,* 2004, vol. 37, 813
- **FILIP, X ; TRIPON, C. ; FILIP, C.** *J. Mag. Resn.,* 2005, vol. 176, 239

- **GRIFFIN, J.M. ; TRIPON, C. ; SAMOSON, A. ; FILIP, C. ; BROWN, S.P.** *Mag. Res. in Chem.,* 2007, vol. 45, S198
- **J. RANDALL.** *Macromol. Sci., Rev. Macromol. Chem. Phys,* 1989, vol. C29, 201
- *J. Randall, Macromol. Sci., Rev. Macromol. Chem. Phys.,* 1989, vol. C29, 201
- **QIU, X ; REDWINE, D. ; GOBBI, G. ; NUAMTHANOM, A. ; RINALDI, P.** *Macromolecules,* 2007, vol. 40, 6879
- **LIU, W. ; RINALDI, P. ; MCINTOSH, L. ; QUIRK, P.** *Macromolecules,* 2001, vol. 34, 4757
- *CHEMICAL ABSTRACTS,* 32509-66-3
- **HE, Y. ; QIU, X ; ZHOU, Z.** *Mag. Res. Chem.,* 2010, vol. 48, 537-542
- **BUSICO, V.** *Macromolecules,* 2005, vol. 38 (16), 6988-6996
- Fractionation,. **SOARES, J.B.P.** Encyclopedia Of Polymer Science and Technology. John Wiley & Sons, 2001, vol. 10, 75-131